# EUROPEAN PATENT APPLICATION

(11) **EP 3 699 636 A1**
(43) Date of publication of application: **26.08.2020**
(21) Application number: 19158170.1
(22) Date of filing: 20.02.2019
(51) Int. Cl.: G01S 17/02, G01S 17/93

(54) **METHOD FOR LIGHT RANGING SYSTEM CONTROL IN A VEHICLE**

(71) Applicant: Melexis Technologies NV, 3980 Tessenderlo (BE)
(72) Inventor: HILL, Adrian, Walled Lake, MI 48390 (US)
(74) Representative: DenK iP

(57) **Abstract**

The present invention relates to a method for controlling a light ranging system 100 mounted on a vehicle 10 provided with receiving means for receiving external data and a plurality of sensors, said light ranging system arranged to be configured by a plurality of configurable parameters and comprising storage means for storing a plurality of predetermined operational schemes. The method comprises :
- collecting, via the receiving means and the plurality of sensors, data indicative of the vehicle's current operation and/or of conditions wherein the vehicle is operating,
- determining based on the collected data an operational scheme among the plurality of predetermined operational schemes for operating the light ranging system,
- deriving one or more control instructions to set at least one configurable parameter in accordance with a parameter table corresponding to the operational scheme,
- applying the one or more control instructions to the light ranging system.

By way of example, the modes or schemes may correspond to a number of scenarios corresponding to e.g. a stationary vehicle, a vehicle moving at low speed (e.g. below 15 km/h) or moderate speed (e.g. between 15 and 50 km/h), a fast moving vehicle, urban or suburban environment, highway, traffic jam circumstances etc.. Configurable parameters that control the operation of the light ranging system regulate the illumination power, illumination Field of View, illumination location, illumination wavelength, illumination frame rate or other pixel settings.

## Description

### Field of the invention

The present invention is generally related to the field of light ranging systems as used in vehicles.

### Background of the invention

In the present invention vehicles comprising a light ranging system are considered whereon one or more sensors are mounted.

In optical sensor applications the range and performance of the sensing system are often limited by the power consumption of the illumination technology, e.g. LED or VCSEL (Vertical Cavity Surface Emitting Laser). The range and performance may further also be affected by eye safety considerations, which impose an average illumination level.

In some cases, a sensor may be used for more than one sensing function (sensor fusion) and the sensor then operates at a performance level high enough to fulfil the different function requirements.

KR101848312 reveals a sensor fusion system for an autonomous emergency braking (AEB) system of a vehicle, comprising a camera module to photograph surroundings of the vehicle; a light detection and ranging (LiDAR) module scanning the surroundings of the vehicle to recognize an object and to detect a distance from the recognized object; a camera module fault monitoring unit to monitor whether or not the camera module is normally operated, a LiDAR module fault monitoring unit to monitor operation of the LiDAR module and a fault monitoring unit receiving a signal from the camera module fault monitoring unit and the LiDAR module fault monitoring unit to monitor the overall operation of a sensor fusion system, and outputting result data thereof to the outside including an AEB system. The proposed system enhances driving safety of an autonomous driving vehicle including the AEB system.

There is a need in the art for solutions allowing improved control of the light ranging system of a vehicle.

### Summary of the invention

It is an object of embodiments of the present invention to provide for a method for controlling the configuration of a light ranging system of a vehicle in a deterministic way based on the available information.

The above objective is accomplished by the solution according to the present invention.

In a first aspect the invention relates to a method for controlling a light ranging system mounted on a vehicle, said vehicle provided with receiving means for receiving external data and a plurality of sensors, said light ranging system arranged to be configured by a plurality of configurable parameters and comprising storage means for storing a plurality of predetermined operational schemes. The method comprises :
- collecting, via the receiving means and the plurality of sensors, data indicative of the vehicle's current operation and/or of conditions wherein the vehicle is operating,
- determining based on the collected data an operational scheme among the plurality of predetermined operational schemes for operating the light ranging system,
- deriving one or more control instructions to set at least one configurable parameter in accordance with a parameter table corresponding to the operational scheme,
- applying the one or more control instructions to the light ranging system.

The proposed solution indeed allows for deterministic control of the light ranging system configuration. From the collected information an operational scheme is selected. The choice of operational scheme is communicated to the light ranging system that comprises a memory wherein for each operational scheme a table of parameter settings is provided. The light ranging system is arranged for converting the parameter settings into actual control instructions to steer the operation of the light ranging system.

In a preferred embodiment the configurable parameters comprise one or more of {illumination power, field of view, wavelength, number of active light emitting elements, illumination location, illumination frame rate}.

Preferably one or more sensors of the plurality are arranged for sensing one or more of {vehicle speed, steering angle, acceleration, tyre pressure, vehicle battery voltage, battery charge level}. Advantageously, one or more sensors of the plurality are arranged for sensing one or more of {a weather condition, a light condition}.

In one embodiment the receiving means is arranged for receiving traffic information and/or location information, wherein the traffic information and/or location information is considered when determining the operational scheme.

In a preferred embodiment each operational scheme mode corresponds to a different parameter table. In other embodiments at least two operational schemes modes of said plurality correspond to a same parameter table. In certain embodiments at least one parameter of the parameter table is calculated on the fly.

In a typical embodiment the light ranging system is a LIDAR system or a Time-of-Flight system.

In embodiments the data is collected each time a cycle of measurements relating to said vehicle's current operation has been performed.

Advantageously, the plurality of predetermined operational schemes has been derived from operational data stored in said vehicle.

In one embodiment the operational scheme also sets parameters of sensors not related to said light ranging system.

In one aspect the invention relates to a program, executable on a programmable device containing instructions, which when executed, perform the method as in previously described.

In another aspect the invention relates to a vehicle comprising
- a plurality of sensors,
- receiving means for receiving external data,
- a light ranging system arranged to be configured by a plurality of configurable parameters,
- storage means for storing a plurality of parameter tables corresponding to a plurality of predetermined operational schemes,
- a vehicle control unit arranged for collecting data indicative of the vehicle's current operation and/or of conditions wherein the vehicle is operating,
whereby the vehicle control unit is arranged for determining based on the collected data an operational scheme among the plurality of predetermined operational schemes and whereby the light ranging system is arranged for deriving one or more control instructions to set at least one configurable parameter in accordance with a parameter table corresponding to the determined operational scheme and for applying the one or more control instructions.

In a preferred embodiment the light ranging system comprises a control unit arranged for compiling the one or more control instructions.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates an embodiment of a system according to the present invention.
Fig.2 illustrates a general block scheme of a light ranging system.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

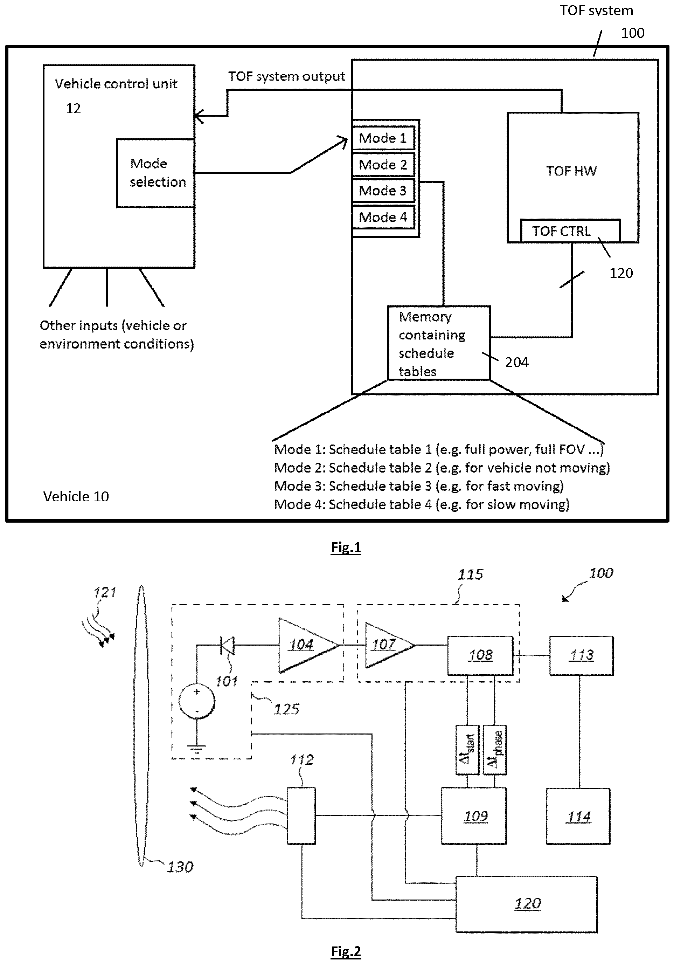

Fig.1 illustrates a scheme of an embodiment of a system as in the present invention. A vehicle (10) comprises a light ranging system (100). In the embodiment shown in Fig.1 the light ranging system is a Time-of-Flight (ToF) system. In other embodiments it may for example be a LIDAR system. The light ranging system can be configured by setting configurable parameters. The light ranging system comprises a set of sensors. These sensors are employed to perform a distance measurement to a target object to which an incident light beam is directed by detecting the reflected light beam. The distance to the target may then be calculated based on a time of flight measurement of the incident light beam and the reflected light beam. Such systems can be used in a variety of adaptive driver assistance (ADAS) applications like emergency breaking, adaptive cruise control, blind spot monitoring.

Apart from these sensors in the light ranging system, the vehicle comprises other sensors communicating with the vehicle control unit (12), either one-way or two-way. These other sensors can for instance relate to conditions surrounding the vehicle, like e.g. a temperature sensor or a rain-light sensor to detect the amount of rain and the amount of light, or as in the case of the light ranging system (100), objects in the field-of-view of the system. Other sensor systems may relate to vehicle speed, acceleration, pressure of the tyres etc. that can be measured within the vehicle. It is also possible to receive data from outside the car, for instance traffic information through e.g. vehicle-to-vehicle information or GPS/GNSS data to calculate the location.

All the sensor data is collected from the sensors in the vehicle control unit (12), where they are processed and may be used to indicate e.g. to the driver the conditions ahead or to indicate if the vehicle is not functioning correctly using measurements coming from meters. It is also possible to use the information for instance to control the operation of the motor e.g. by shutting it down in case certain conditions are met. These types of sensors and the use of their information are commonly known in the art. The vehicle control unit may apply central computing or distributed computing.

Fig.2 shows the light ranging system (100) in principle. The system comprises a light source (112) operably connected to timing control block (109), which controls the light emission timing and received signal sampling timing and their relation, for instance as described in patent application EP17184770, where the sampling of the received signal is defined using two parameters Δtₛₜₐᵣₜ and Δtₚₕₐₛₑ.

In operation, the light source (112) emits pulses or modulated light into the scene in its Field of View (FOV). The FOV is defined by the light source and its relation to optics (130). The light source may comprise one or more light emitting devices, e.g. LED or VCSEL. Different parameters of the light source can be controlled as well as the number of active light emitting devices. Thereby it is possible to control e.g. illumination power or wavelength, or the light pattern and thereby the FOV.

In case there is an object in the FOV, the emitted light is partially reflected back. This is shown in Fig.2 as returning light (121). The returning light is detected through the optics (130) with one or more light sensitive detectors (125), pictured with a diode (101) in Fig.2. The optics (130) may be shared with the light emitting devices. Alternatively, the detectors and the light emitting devices can each have their own optics. The functionality of the detectors can also be controlled, e.g. the number of active pixels. From the signal received by the light sensitive detectors is then amplified by an amplifier, typically a transimpedance amplifier. It is also possible to store the received signal in analogue form in one or more sample-and-hold (S/H) circuits (115) comprising one or more buffers (107) and S/H cells (108). From the S/H-circuit the sampled values may be converted to digital form using Analogue-to-Digital conversion (ADC) (113). From the converter (113) the result can be read to a Digital Signal Processing block (114) e.g. for low-pass filtering and pulse detection (e.g. by applying curve fitting or correlation).

As it can be seen, there are several parameters that control the operation of the light ranging system (100). These parameters regulate among other things the illumination power, illumination Field of View, illumination location, illumination wavelength, illumination frame rate or other pixel settings. It is possible to set parameters relating to the light source side of the system (i.e. relating to the illumination configuration) and/or relating to the pixels at the detector side of the system. Concerning the pixel configuration distinction can be made between settings that are common for the whole array of pixels, e.g. frame rate, integration time, and settings relating to only part of the array, e.g. to apply pixel binning (i.e. combining of pixels) to implement some high dynamic range strategies relating to pixel by pixel operation.

The parameters and the way they are controlled are device type specific, i.e. depending on the type of light ranging system; the control signals are specific to that system. Fig.2 shows a parameter control block (120), which is connected to different parts of the light ranging system (100). The control block (120) may be implemented in any suitable combination of hardware and/or software functional blocks. The light ranging control block (120) generates the control signals (possibly as a sequence in time), which are then communicated to different parts of the system. The control signals may be digital or analogue.

The light ranging system is controlled by a control block (TOF CTRL 120), as also shown in Fig.1. The control block is arranged to provide the light ranging system with one or more control instructions that set one or more of the light ranging system parameters. The system parameter values are taken from sets of parameters stored in tables in the memory (204). The controller block converts the parameter settings taken from the memory into corresponding control signals, which are next communicated to the light ranging system (TOF HW). The control block (120) may comprise a compiler block to generate the control signals. In the control block there may be a logic block operationally connected to the memory (204) and aware of the type of the light ranging system.

The control instruction signals are derived in the control block from deterministic signals according to a set of parameters stored in the memory (204) and corresponding to a schedule selected from a set of predetermined schedules. In this way the configuration of the light ranging system is only changed in a deterministic way based on predetermined vehicle and vehicle environment information which has been validated to perform as such. So a system always works in "the same" way (i.e. its operation is predictable) and can therefore be validated to meet safety system requirements while still optimizing operation of the system within the many different constraints and utilizing the many parameters/variables in the control system.

The predetermined schedules each describe an operational scheme, indicated in Fig.1 as Mode1, Mode2, Mode3 and Mode4, respectively. These various 'Modes' (i.e. schedules) have a corresponding table with parameter settings to be used in certain operational conditions. As already mentioned, the parameter tables are stored in a storage means (204) like a database or a look-up table. In certain embodiments each operational scheme has a different parameter table. In other embodiments two or even more operational schemes are linked to a same parameter table. The storage means is in some embodiments a part of the control block. In other embodiments it is a separate block, possibly even an external block, in connection with the TOF control block, wherefrom the selected operational scheme (including the operational parameters) is uploaded.

The selection of said schedule among the various possible schedules is in the present invention performed in the vehicle control unit (12) based on the input data collected from the sensors and the light ranging system output and from the receiving means of the vehicle. The VCU is thus capable of determining which of the available schedules fits best with the current conditions wherein the light ranging system is operating. Selection of the schedule may be based on information representative of the vehicle operation, the environmental conditions/information or a combination of both. The information can be in the form of parameter values obtained from measurement (i.e. raw detection data or filtered detection data), analysed distance data, text data, light ranging system data etc.

Basically the available information can be categorized into two types of data : information related to the operation of the vehicle and environmental information concerning the external conditions wherein the vehicle is operating.

Information related to the vehicle operation may e.g. be vehicle speed data, a steering angle, data related to the vehicle trajectory, the braking system or a stability control system. Also other sensors on the vehicle can provide useful information, e.g. a rain/light sensor. Further information may relate to the vehicle battery voltage and/or the charge level.

Information related to the environment wherein the vehicle is operating, may for example be data on the roadway type, high density map data, external light conditions, daytime/night time, time of the day, atmospheric conditions e.g. precipitation. Other info that can be taken into account in the control block may for example be the planned routing.

Another input that can be considered is for example an emergency vehicle notification. Suppose a received Dedicated Short Range Communications (DSRC) information (vehicle-to-vehicle or vehicle-to-infrastructure) whereby location and speed vector are transmitted, indicates a fast approaching vehicle is approaching. Such information can be used after processing in the VCU as an emergency notification, resulting in the light ranging system preparing a detection of the vehicle from a certain direction. Yet another input that can be taken into account comprises optical feedback (including lens cleanliness). It could be that the light ranging system informs the VCU that the optics are not clean. The VCU can then, e.g. in a situation where the power is already maximum, make sure that the light ranging system starts operating in limited power mode.

The idea behind the invention is to provide in the database (or any other appropriate storage means) a number of parameter tables corresponding to different operational scenarios, i.e. a number of operational schemes. Regulating the light ranging system in the vehicle is performed by first detecting actual conditions wherein the vehicle/light ranging system is operating and then selecting in the vehicle control unit, based on the gathered information, one of the available operational schemes (referred to as 'Modes' in Fig.1) that best fits to the current conditions and sending an indication of the selected scheme to the light ranging system, which based on that indication takes corresponding parameter settings from the memory and generates control instructions which allow setting one or more light ranging system parameters in accordance with said conditions. By way of example, the modes may correspond to a number of scenarios corresponding to e.g. a stationary vehicle, a vehicle moving at low speed (e.g. below 15km/h) or moderate speed (e.g. between 15 and 50 km/h), a fast moving vehicle, urban or suburban environment, highway, traffic jam circumstances etc...

The proposed solution allows dynamically adapting the illumination configuration to changing application conditions. This leads to more appropriate settings during operation and thus more energy efficiency. Different parts of the scene/field of illumination in front of the light source can so be illuminated differently. For example, the use of high power illumination can so be limited to situations wherein it is really required given the number of frames per second and/or the field of view. Alternatively, only a window, i.e. a part of the field of view, is considered wherein a part of the detector array is read out more often than the rest of the detector array. Further, the eye safety is enhanced, as a lower average illumination power can be used and certain zones in the field of view can operate with reduced average power levels.

In any application example there is optical sensing technology (such as ToF or LIDAR) available in the vehicle with which the invention may be applied. The solution of this invention may rely on the optical sensors mounted on different parts of the vehicle to provide sensor information for the zones adjacent to the sensor mounting locations. The sensed data can be used to control amongst other things the power consumption and/or field of view.

In each location and in each vehicle mode of operation, the sensor performance can be optimized in either a single or multiple operating mode by use of a schedule with associated parameter table. The operational schedule and corresponding parameter table to be applied is dynamically selectable based on the operating conditions (e.g. vehicle movement), operation limitations (e.g. minimized power consumption, heat generation of the illumination technology) and environmental operating limitations (e.g. eye safety).

Suppose the light ranging system under consideration is a time-of-flight system or LIDAR system integrated in a chipset. Different schemes of operation with corresponding parameter tables can be stored in the system or external to it, from which one is selected by the vehicle control unit given the current operational conditions. The selected parameter table can be fixed (e.g. in a ROM) or uploaded at system initiation (e.g. vehicle ignition on). Alternatively, the parameter table in accordance with the operational scheme to be used may be continuously communicated to registers used within the chipset for management and execution.

Control signals are generated in the light ranging system based on the parameter settings corresponding to the selected operational schedule received from the vehicle control unit, which can be processed locally in the chipset comprising the light ranging system to set parameters of both the illumination (or illumination array) and the pixel array. The control signals convey instructions to set parameters according to the dynamic parameter table selected in the vehicle control unit. The vehicle control unit receives external (vehicle, environmental and/or other) information and selects accordingly the most appropriate mode and communicates by serial data to the chipset comprising the light ranging system which executes in the form of a schedule table.

In an alternative implementation the chipset comprising the light ranging system is preloaded (into on-board memory) with a number of "preferred" schedule tables and the required operating mode of the system chipset (as defined in the schedule table) is selected by an external microcontroller which itself uses algorithms and additional data to determine the correct operating mode for the light ranging system.

A practical example is now provided. The following schedule tables are stored in the memory 204 in the light ranging system 100 in Fig.1 :

| **Schedule table 1:** for stationary vehicle front facing sensor 15m@1 Frame/sec, 2m@10 Frame/s | | | |
|---|---|---|---|
| **Schedule** | **Power** | **FOV/Window** | **Pixel Grouping** |
| Every 10^{th} sample | Maximum | Illuminate all FOV | Grouped for max sensitivity |
| 9 samples | Low power | Low array only | Single for max resolution |
| Repeat 100msec/sample | | | |

| **Schedule table 2:** for stationary vehicle front facing sensor 15m@0.5Frame/sec, 2m@5Frames/s | | | |
|---|---|---|---|
| **Schedule** | **Power** | **FOV/Window** | **Pixel Grouping** |
| Every 10^{th} sample | Maximum | Illuminate full FOV | Grouped for max sensitivity |
| 9 samples | Low power | Low array only | Single for max resolution |
| Repeat 200msec/sample | | | |

The front facing sensor as described in the first and the second schedule table is used in a stationary vehicle situation. In Schedule table 1 maximum power is used for the illumination array every tenth sample, which allows a reach of 15 meter. The full field-of-view is illuminated. To obtain maximum sensitivity pixels are grouped for reading out, i.e. binning (combining of read-outs from several pixels), is applied. For the other 9 samples out of the group of 10 samples a reduced power level is applied which reduces the illumination range to 2 meter. To obtain maximal time/distance resolution each pixel in the detector is read out separately in the low power mode. In this case only the low array part of the detector is employed, so that only a window of the full field of view is considered. In the first schedule table a repetition rate is provided of 100 msec/sample. Schedule table 2 differs from table 1 by the repetition rate, which is 200msec/sample in Table 2. Due to the doubling of the repetition period, the frame rates are halved to 0.5 frame/s wherein the range is 15m and to 5 frames/s with the 2m range.

| **Schedule table 3:** for fast moving vehicle side facing sensor 15m@10Frames/s, 8m@10Frames/s | | | |
|---|---|---|---|
| **Schedule** | **Power** | **FOV/Window** | **Pixel Grouping** |
| Every other sample | Maximum | Illuminate full FOV | Grouped for max sensitivity |
| Every other sample | medium | Illuminate low and mid-level arrays only | Grouped for max sensitivity |
| Repeat 50msec/sample | | | |

Schedule table 3 is for a side facing sensor of a fast moving vehicle. A sample with maximum power, full field of view illumination and a reading out with pixel grouping in order to achieve maximum sensitivity is now alternated with a sample with medium power, illumination of low and mid-level arrays only, while still applying read-out with pixel grouping to keep maximum sensitivity. When maximum power is applied, an illumination range of 15m is reached, which reduces to a range of 8m when the medium power level is used. The repetition rate is 50msec/sample.

| **Schedule table** 4: for low speed (e.g. self-parking) vehicle all surround sensors 8m@5Frames/s (with higher window in FOV@1Frame/s) | | | |
|---|---|---|---|
| **Schedule** | **Power** | **FOV/Window** | **Pixel Grouping** |
| Every 5^{th} sample | Maximum | Illuminate full FOV | Grouped for max sensitivity |
| 4 samples | Medium | Illuminate low and mid-level arrays only | Single for max resolution |
| Repeat 200msec/sample | | | |

Schedule table 4 is for all surround sensors of a low speed vehicle (e.g. when self-parking). Here every fifth sample gets maximum power and full field of view illumination, and a read-out with pixel grouping (binning) in order to obtain maximum sensitivity. In this case the full field-of-view is illuminated. The other 4 samples of each group of five samples have medium power, illumination of low and mid-level arrays only and read-out of each pixel separately for maximum resolution. The repetition rate is set at 200msec/sample.

Having a light ranging system with those four schedule tables allows manufacturers to program vehicle control units in several possible ways. For example, a first manufacturer can provide a vehicle control unit operable according to the following table :

| Environment data | Case 1 | Case 2 | Case 3 |
|---|---|---|---|
| Speed | > 10 km/h | < 10 km/h | 0 km/h |
| GNSS receiver + HD map application | city | city | city |
| Drive mode | normal | Parking assistance | normal |
| Selected Schedule table | 1 | 4 | 1,2 |

In case 3 it is possible to switch between Schedule Table 1 and Schedule Table 2.
Another manufacturer may opt for a vehicle control unit wherein both steering and GNSS information is exploited. The VCU is then operable e.g. according to :

| Environment data | Case 1 | Case 2 | Case 3 | Case 4 |
|---|---|---|---|---|
| Steering angle | turning | turning | straight | n/a |
| Speed | < 10 km/h | > 10 km/h <90 km/h | > 10 km/h <90 km/h | >90 km/h |
| Location (GNSS) | highway | city | city | Highway |
| Selected Schedule table | 1 | 2 | 3 | 3 |

Yet another manufacturer may use the following scheme, wherein DSRC is applied :

| Environment data | Case 1 | Case 2 | Case 3 |
|---|---|---|---|
| Speed | < 10 km/h | > 10 km/h | > 10 km/h |
| Location (GNSS) | City | n/a | highway |
| DSRC | None | Alert | none |
| Selected Schedule table | 1 | 3 | 4 |

The proposed approach based on a set of parameter tables corresponding to a set of scenarios can also be applied to perform some self-monitoring at system level. When it is observed certain operational limitations are being approached (e.g. a temperature limit of the illumination array), this potential performance degradation can be diagnosed and the status is communicated back to the vehicle, allowing the vehicle to transition into a mode where the operational limit is not a factor.

The deterministic behaviour of the proposed system is important in the specification and validation of Safety Systems and when providing a Safety Element Out Of Context (SEOOC) ASIL capability for a module for ISO26262 where the system components have to contribute to the System Safety Goals and performance assumptions need to be made for the elements of the system.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for controlling a light ranging system (100) mounted on a vehicle (10), said vehicle provided with receiving means for receiving external data and a plurality of sensors, said light ranging system arranged to be configured by a plurality of configurable parameters and comprising storage means for storing a plurality of predetermined operational schemes, the method comprising :
- collecting, via said receiving means and said plurality of sensors, data indicative of said vehicle's current operation and/or of conditions wherein said vehicle is operating,
- determining based on said collected data an operational scheme among said plurality of predetermined operational schemes for operating said light ranging system,
- deriving one or more control instructions to set at least one configurable parameter in accordance with a parameter table corresponding to said operational scheme,
- applying said one or more control instructions to said light ranging system.

2. Method for controlling as in claim 1, wherein said configurable parameters comprise one or more of {illumination power, field of view, wavelength, number of active light emitting elements, illumination location, illumination frame rate}.

3. Method for controlling as in claim 1 or 2, wherein one or more sensors of said plurality are arranged for sensing one or more of {vehicle speed, steering angle, acceleration, tyre pressure, vehicle battery voltage, battery charge level}.

4. Method for controlling as in any of claims 1 to 3, wherein one or more sensors of said plurality are arranged for sensing one or more of {a weather condition, a light condition}.

5. Method for controlling as in any of the previous claims, wherein said receiving means is arranged for receiving traffic information and/or location information, and wherein said traffic information and/or location information is considered when determining said operational scheme.

6. Method for controlling as in any of the previous claims, wherein each operational scheme mode corresponds to a different parameter table.

7. Method for controlling as in claims 1 to 5, wherein at least two operational schemes modes of said plurality correspond to a same parameter table.

8. Method for controlling as in any of the previous claims, wherein at least one parameter of said parameter table is calculated on the fly.

9. Method for controlling as in any of the previous claims, wherein said data is collected each time a cycle of measurements relating to said vehicle's current operation has been performed.

10. Method for controlling as in any of the previous claims, wherein said light ranging system is a LIDAR system or a Time-of-Flight system.

11. Method for controlling as in any of the previous claims, wherein said plurality of predetermined operational schemes has been derived from operational data stored in said vehicle.

12. Method for controlling as in any of the previous claims, wherein said operational scheme also sets parameters of sensors not related to said light ranging system.

13. A program, executable on a programmable device containing instructions, which when executed, perform the method as in any of claims 1 to 10.

14. Vehicle comprising
- a plurality of sensors,
- receiving means for receiving external data,
- a light ranging system (100) arranged to be configured by a plurality of configurable parameters,
- storage means for storing a plurality of parameter tables corresponding to a plurality of predetermined operational schemes,
- a vehicle control unit arranged for collecting data indicative of said vehicle's current operation and/or of conditions wherein said vehicle is operating,
whereby said vehicle control unit is arranged for determining based on said collected data an operational scheme among said plurality of predetermined operational schemes, and whereby said light ranging system is arranged for deriving one or more control instructions to set at least one configurable parameter in accordance with a parameter table corresponding to said determined operational scheme and for applying said one or more control instructions.

15. System as in claim 14, wherein said light ranging system comprises a control unit (22) arranged for compiling said one or more control instructions.
